# EUROPÄISCHE PATENTSCHRIFT

(11) **EP 1 870 610 B1**
(45) Veröffentlichungstag und Bekanntmachung des Hinweises auf die Patenterteilung: **16.01.2013**
(21) Anmeldenummer: 07011526.6
(22) Anmeldetag: 13.06.2007
(51) Int. Cl.: F16D 23/12

(54) **Hebelsystem sowie Verfahren zu dessen Montage**
Lever system and method for its assembly
Système de levier et son procédé de montage

(30) Priorität: 20.06.2006 DE 102006028208
(43) Veröffentlichungstag der Anmeldung: 26.12.2007
(73) Patentinhaber: Schaeffler Technologies AG & Co. KG, 91074 Herzogenaurach (DE)
(72) Erfinder: Burkhart, Dirk, 77815 Bühl (DE); Mán, Lászlo, Dr., 77833 Ottersweier-Unzhurst (DE)

(56) Entgegenhaltungen:
- EP-A2- 1 548 313
- DE-A1-102004 009 832
- DE-A1-102005 027 608

## Beschreibung

Die vorliegende Erfindung betrifft eine Kombination aus einer Getriebeglocke und einem Hebelsystem zur Betätigung von Kupplungen oder Getriebe-Bremsen, insbesondere für Kraftfahrzeuge, mit einem Hebel mit einer ersten Endseite, einer zweiten Endseite und mindestens einem Auflagepunkt, der gleichzeitig einen Drehpunkt darstellen kann. Die Erfindung betrifft des Weiteren ein Verfahren zur Montage eines derartigen Hebelsystems.

Eine Getriebeglocke mit einem derartigen Hebelsystem ist beispielsweise aus der DE 10 2004 009832 bekannt. Das Antriebselement, dies ist ein Elektromotor mit in der Regel direkt angeflanschtem Getriebe, ist dabei direkt an die Getriebeglocke angeflanscht, da so eine bessere Wärmeabfuhr und ein günstigerer Wärmehaushalt für den Elektromotor erreicht werden kann. Der Antriebsmotor ist dazu von den restlichen Teilen des Aktors getrennt, sodass diese getrennt voneinander montiert werden können. Üblicherweise ist die Spindel, über die der verlagerbare Drehpunkt verlagert wird, trennbar mit dem Antriebsmotor bzw. der Antriebsmotor/Getriebeeinheit des Aktors verbunden. Der Elektromotor der Antriebsmotor/Getriebeeinheit kann entweder die Spindel ohne ein Untersetzungsgetriebe antreiben oder es kann an den Antriebsmotor ein Untersetzungsgetriebe angeflanscht sein, über das der Antrieb der Spindel erfolgt. Die Welle des Antriebsmotors muss bei der Montage mit der Spindel mittels einer Kupplung verbunden werden. Da der Antriebsmotor an einer Getriebeglocke zentriert wird und nicht direkt an den durch die Spindel angetriebenen Teilen des Aktors kann aufgrund von Fertigungstoleranzen ein Versatz und eine Winkelabweichung zwischen der Motorachse und der Spindelachse auftreten. Diese Abweichungen müssen durch die Kupplung zwischen Antriebsmotor und Spindel ausgeglichen werden.
Aus der DE 10 2005 027 608 A1 ist es bekannt einen Hebelaktor eines Hebelsystems mit einem Laufwagen am Glockenbogen zu fixieren. Ein Stellmotor wird dann anschließend über eine Rutschkupplung bzw. über eine Klauenkupplung angeflanscht.

Nachteilig an Hebelsystemen nach Stand der Technik ist, dass die Montage durch die Trennung von Spindel und Antriebsmotor aufwendig ist und eine zusätzliche Kupplung zwischen Spindel und Antriebsmotor benötigt wird.

Eine Aufgabe der vorliegenden Efindung ist es daher, eine gattungsgemäße Kombination von Getriebeglocke und Hebelsystem bereitzustellen, das einfacher zu montieren ist.

Dieses Problem wird gelöst durch eine Kombination einer Getriebeglocke und eines Hebelsystem. Zur Betätigung von Kupplungen oder Getriebe-Bremsen, insbesondere für Kraftfahrzeuge gemäß Anspruch 1, mit einem Hebel mit einer ersten Endseite, einer zweiten Endseite und mindestens einem Auflagepunkt, der gleichzeitig einen Drehpunkt darstellt, wobei das Hebelsystem eine Antriebseinheit sowie eine Hebeleinheit umfasst und wobei die Antriebseinheit durch eine in Einbaulage im Wesentliche radiale Bewegung durch eine Öffnung in der Getriebeglocke hindurch mit der Hebeleinheit verbunden wird. Die in Einbaulage im Wesentlichen radiale Bewegung bezieht sich auf die Kupplungsachse der Kupplung zwischen Verbrennungsmotor und Untersetzungsgetriebe des Kraftfahrzeuges, diese ist in der Regel identisch mit der Drehachse der Kurbelwelle. In Einbaulage, das heißt fertig montiert, ist das Hebelsystem bezüglich einer Drehachse der Spindel bzw. des Antriebsmotors im Wesentlichen radial zur Drehachse der Fahrzeugkupplung angeordnet. Unter Antriebseinheit und Hebeleinheit werden hier zwei Module verstanden, die zusammengefügt das Hebelsystem ergeben. Es handelt sich also um ein Hebelsystem, das in zwei vorgefertigte Teilmodule geteilt werden kann, die durch ein einfaches Zusammenführen beider Teile montiert werden. Weiter ist vorgesehen, dass die Antriebseinheit eine Antriebsmotoreinheit, eine Spindel,eine Rolleneinheit sowie eine Abstützung, mit der sich diese an einer Getriebeglocke abstützt, umfasst.

Die Antriebsmotoreinheit umfasst den Elektromotor gegebenenfalls samt einem Untersetzungsgetriebe zum Antrieb der Spindel, die wiederum die Rolleneinheit verschiebt. Die Abstützung stellt zum einen eine Laufbahn auf Seiten der Getriebeglocke für die Rolleneinheit bereit und dient zum anderen der Befestigung der Antriebseinheit an der Getriebeglocke. Vorzugsweise ist weiter vorgesehen, dass die Abstützung, die Spindel sowie die Rolleneinheit über eine in Einbaulage radiale Länge der Antriebseinheit eine Querschnittsfläche besitzen, die kleiner als eine Öffnung der Getriebeglocke ist. Die in Einbaulage radiale Länge der Antriebseinheit bezieht sich auf eine radiale Richtung bezüglich der Kupplungsachse der Fahrzeugkupplung. Mit anderen Worten ausgedrückt wird die radiale Länge in Richtung der Drehachse der Spindel des Hebelsystems gemessen. Dadurch, dass die Abstützung, die Spindel sowie die Rolleneinheit eine Querschnittsfläche besitzen, die kleiner als die Öffnung der Getriebeglocke ist, ist sicher gestellt, dass die Antriebseinheit (ohne Antriebsmotoreinheit) durch die Öffnung der Getriebeglocke eingeführt werden kann.

Vorzugsweise ist vorgesehen, dass die Öffnung der Getriebeglocke in eine Stufenbohrung übergeht. Die Stufenbohrung kann Mittel zur Zentrierung der Antriebsmotoreinheit umfassen. Ebenso kann die Hebeleinheit Mittel zur Zentrierung der Antriebseinheit umfassen. Vorzugsweise ist vorgesehen, dass die Hebeleinheit eine Führungsnut umfasst, in die ein Führungsprofil der Antriebseinheit eingreift. Dabei weist die Führungsnut vorzugsweise eine Fangnut auf.

Das Eingangs genannte Problem wird auch gelöst durch ein Verfahren gemäß Anspruch 8 zur Montage eines Hebelsystems zum Betätigen von Kupplungen oder Getriebe-Bremsen, insbesondere für Kraftfahrzeuge, mit einem Hebel mit einer ersten Endseite, einer zweiten Endseite und mindestens einem Auflagepunkt, der gleichzeitig einen Drehpunkt darstellen kann, umfassend die Verfahrensschritte der Montage einer Hebeleinheit in einer Getriebeglocke sowie dem Einführen einer Antriebseinheit durch eine Öffnung in die Getriebeglocke. Erfindungsgemäß ist dabei vorgesehen, dass die Antriebseinheit im Wesentlichen radial bezogen auf eine Kupplungsachse in die Öffnung bzw. in die Hebeleinheit eingeführt wird. Vorzugsweise ist weiter vorgesehen, dass der Hebel so vorgespannt ist, dass dieser beim Einführen der Antriebseinheit durch eine oder mehrere Rollen der Rolleneinheit in axialer Richtung verdrängt wird.

Im Folgenden werden Ausführungsbeispiele der Erfindung anhand der beiliegenden Zeichnungen erläutert. Dabei zeigen:
- Fig. 1: eine Prinzipdarstellung eines Hebelsystems in der Seitenansicht;
- Fig. 2: das Hebelsystem gemäß Fig. 1 in der Draufsicht in Schnitt A-A;
- Fig. 3: eine räumliche Ansicht einer Getriebeglocke mit darin angeordnetem erfindungsgemäßen Hebelsystem;
- Fig. 4a-e: verschiedene Stufen der Montage der Antriebseinheit mit der erfindungsgemäßen Hebeleinheit;
- Fig. 5: eine Draufsicht auf die Hebeleinheit in Richtung der Antriebsmotoreinheit gemäß Schnitt b-b in Figur 4;
- Fig. 6: eine räumliche Darstellung der Montage der Antriebseinheit;
- Fig. 7: einen Schnitt durch ein erfindungsgemäßes Hebelsystem.

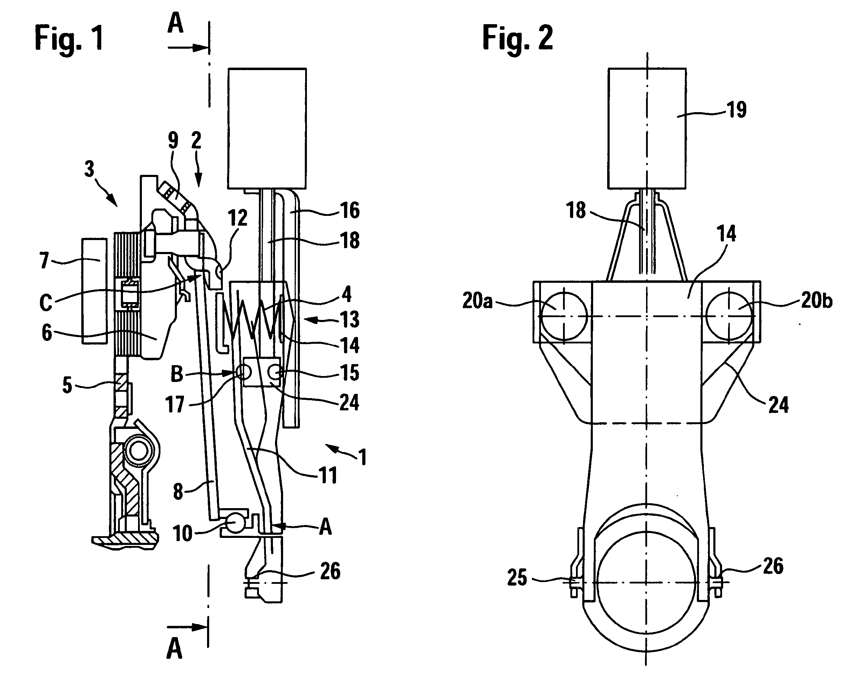

Fig. 1 zeigt ein Hebelsystem 1 zur Betätigung einer Ausrückvorrichtung 2 für eine Kupplung 3. Von der Kupplung 3 sind hier nur die zum Verständnis der Wirkungsweise notwendigen Teile dargestellt. Die Kupplung 3 umfasst eine Kupplungsscheibe 5, die mit einer hier nicht dargestellten Getriebeeingangswelle drehfest verbunden ist, sowie eine Druckplatte 6 und eine Gegendruckplatte 7, die drehfest mit einer Kurbelwelle einer hier nicht dargestellten Brennkraftmaschine verbunden sind. Im eingekuppelten Zustand der Kupplung 3 werden die Druckplatte 6 und die Gegendruckplatte 7 auf die Kupplungsscheibe 5 gedrückt, so dass eine reibschlüssige Verbindung zwischen diesen hergestellt ist und eine Drehmomentübertragung von der Kurbelwelle auf die Getriebeeingangswelle erfolgt. Im ausgekuppelten Zustand werden die Druckplatte 6 und die Gegendruckplatte 7 nicht auf die Kupplungsscheibe 5 gedrückt, also von dieser abgehoben, so dass keine reibschlüssige Verbindung vorhanden ist und auch kein Drehmoment übertragen wird. Die Druckplatte 6 wird mittels einer Tellerfeder 8, die sich an einem Kupplungsdeckel 9 abstützt, in Richtung der Gegendruckplatte 7 und damit der Kupplungsscheibe 5 gedrückt. Dabei gibt es zwei Möglichkeiten, zum einen eine passiv zugedrückte Kupplung 3, die also aktiv durch Betätigung der Tellerfeder 8 aufgedrückt werden muss, und umgekehrt eine aktiv zugedrückte Kupplung 3, die also bei entlasteter Tellerfeder 8 geöffnet ist und durch Betätigung der Tellerfeder 8 geschlossen wird. Die Betätigung der Tellerfeder erfolgt über ein Ausrücklager 10, das durch das Hebelsystem 1 betätigt wird. Das Hebelsystem 1 umfasst einen Hebel 11, der an einer ersten Endseite A mit einem Lagerring des Ausrücklagers 10 verbunden ist und an einer zweiten Endseite C an einem gehäuseseitigen Lager 12 in radialer Richtung festgelegt ist und gegen Federkraft zweier Federn 4 an einem gehäuseseitigen Lager 12 axial verschiebbar sowie drehbar angeordnet ist. Der Hebel 11 stützt sich zwischen dem gehäuseseitigen Lager 12 und dem Ausrücklager 10 an einem verlagerbaren Drehpunkt 13, der einen Auflagepunkt B bildet und gleichzeitig ein Drehpunkt sein kann, ab, der z. B. in Form einer Rolleneinheit 14 ausgeführt sein kann. Die von dem Ausrücklager 10 und der Feder 4 auf den Hebel ausgeübte Kraft befinden sich gemäß der bekannten Hebelgesetze stets im Gleichgewicht, wobei die Hebellängen zum einen durch den Abstand des Ausrücklagers 10 zum Drehpunkt 13 und zum anderen durch den Abstand des gehäuseseitigen Lagers 12 zum Drehpunkt 13 und damit durch die Lage des Drehpunktes 13 bestimmt werden. Der Lagerinnenring des Ausrücklagers 10 umfasst zwei Aufnahmezapfen 25, die in entsprechende Klauen 26 des Hebels 11 eingreifen. Der Hebel 11 ist im Bereich des Ausrücklagers 10 so ausgeschnitten, dass die Getriebeeingangswelle hindurchgeführt werden kann.

Die Rolleneinheit 14 umfasst eine oder mehrere Rollen 15, mit denen sich diese an einer Abstützung 16 abstützt sowie eine oder mehrere Rollen 17, mit denen sich diese dem Hebel 11 abstützt. zur Die Rollen 15, 17 sind an einem Rollenträger 24 angeordnet, der eine Gewindebohrung zur Aufnahme der Spindel 18 aufweist. Durch radiale Verschiebung der Rolleneinheit 14, dies ist durch einen Doppelpfeil X in den Figuren 1 und 2 dargestellt, erfolgt so eine axiale Verschiebung des Ausrücklagers 10, dies ist durch einen Doppelpfeil Y in Fig. 1 angedeutet, so dass die Kupplung 3 durch eine radiale Verschiebung der Rolleneinheit 14 geöffnet und geschlossen werden kann. Die Rolleneinheit 14 wird mittels der Spindel 18, die von einer gehäusefesten Antriebsmotoreinheit 19 angetrieben wird, radial gegenüber dem in radialer Richtung im Wesentlichen gehäusefesten Hebel 11 verschoben. Der Hebel 11 umfasst, wie aus Fig. 2 zu erkennen ist, Flansche 20a, 20b zur Abstützung an den Federn 4 und zur Befestigung mittels der Federn 4 an einer Getriebeglocke 23.

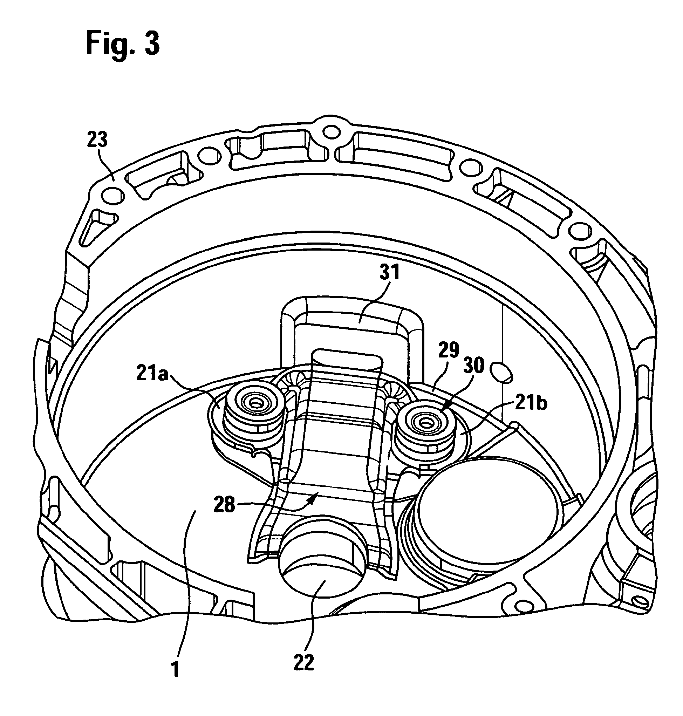

Fig. 3 zeigt eine räumliche Ansicht einer Getriebeglocke 23 mit darin angeordnetem Hebelsystem 1. Zu erkennen ist der Hebel 11 sowie die Abstützung 16 samt der Flansche 20a und 20b, die mittels Befestigungsschrauben 21a und 21 b mit den Federn 4 verschraubt sind. Eine Bohrung 22 in der Getriebeglocke 23 dient der Durchführung der Getriebeeingangswelle. Die in Fig. 3 nicht dargestellte Kupplung wird zur Montage in der Ansicht der Fig. 3 von oben (also in die Zeichenebene) in die Getriebeglocke 23 eingeführt.

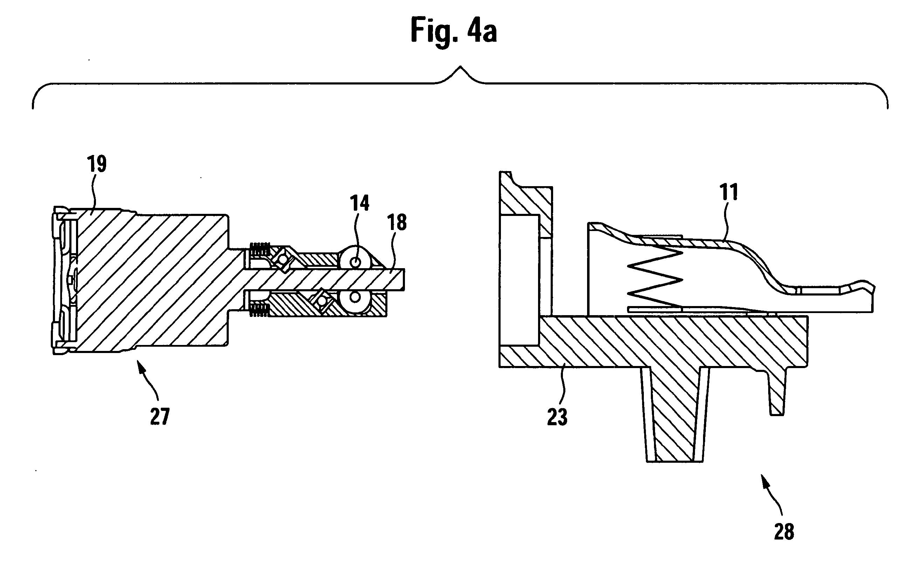

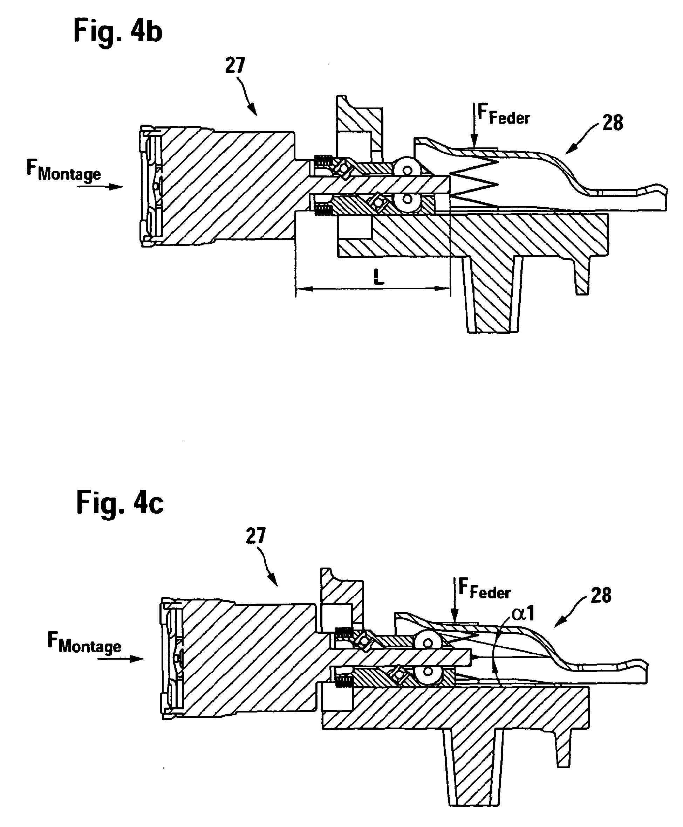

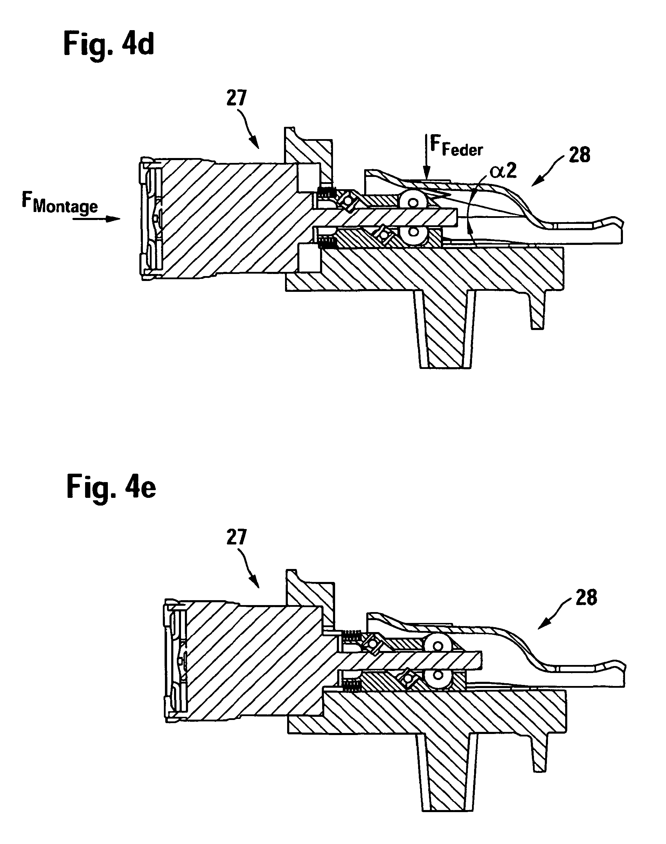

Die Antriebsmotoreinheit 19, die Abstützung 16, die Spindel 18 sowie die Rolleneinheit 14 bilden eine miteinander verbundene Antriebseinheit 27, siehe dazu Fig. 4a. Der Hebel 11 bildet mit der Abstützung 16 und den Federn 4 sowie deren Befestigung an Hebel 11 und Abstützung 16 eine Hebeleinheit 28. Zur Montage wird zunächst die Hebeleinheit 28 gemäß Fig. 3 in der Getriebeglocke 23 befestigt. Die Federn sind üblicherweise zwischen Tellern 29 von Tellerschrauben 30 und den Flanschen 20a bzw. 20b angeordnet. Zur Montage der Hebeleinheit 28 wird diese in die Getriebeglocke 23 eingelegt, die Tellerschrauben 30 werden mit aufgesteckten Federn 4 durch die Bohrungen der Flansche 20a, 20b gesteckt und festgeschraubt. In diesem Montagezustand ist die Hebeleinheit 28 funktionsfähig, d.h. durch die Federn 4 in axialer Richtung verlagerbar mit der Getriebeglocke 23 verbunden. Die Antriebseinheit 27 wird sodann als geschlossene Baugruppe durch die Aufnahmeöffnung 31 der Getriebeglocke 23 eingeführt. Dieser Vorgang ist in Fig. 4a in der Ausganpsposition sowie Fig. 4 b-e mit den Positionen 1-4 dargestellt. Die Abstützung 16, die Spindel 18 sowie die Rolleneinheit 14 besitzen über eine in Einbaulage radiale Länge L (siehe Fig. 4a) der Antriebseinheit 27 eine Querschnittsfläche QA, die kleiner als die Öffnung 39 mit einer Querschnittsfläche QB ist.

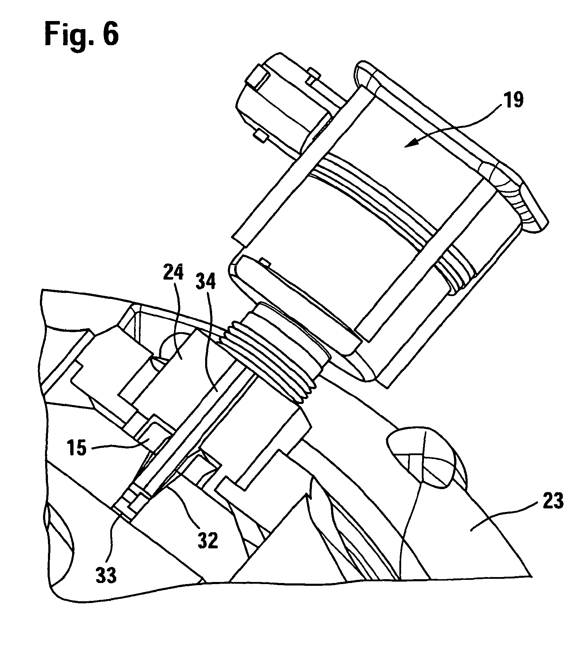

Zunächst wird die vormontierte Antriebseinheit 27 durch die Aufnahmeöffnung 31 in die Getriebeglocke 23 und damit zwischen Hebel 11 und Abstützung 16 eingeführt. Die Abstützung 16 weist eine Führungsnut 33 auf, die ein Führungsprofil 34 des Rollenträgers 24, siehe dazu Fig. 6, aufnimmt. Um ein leichteres Einführen des Führungsprofils 34 in die Führungsnut 33 zu ermöglichen, weist die Führungsnut 33 eine sich verbreiternde Fangnut 32 auf, deren radial äußerer Bereich eine größere Nutbreite aufweist als der radial innere Bereich und so ein leichteres Einführen des Führungsprofils 34 in die Führungsnut 33 ermöglicht.

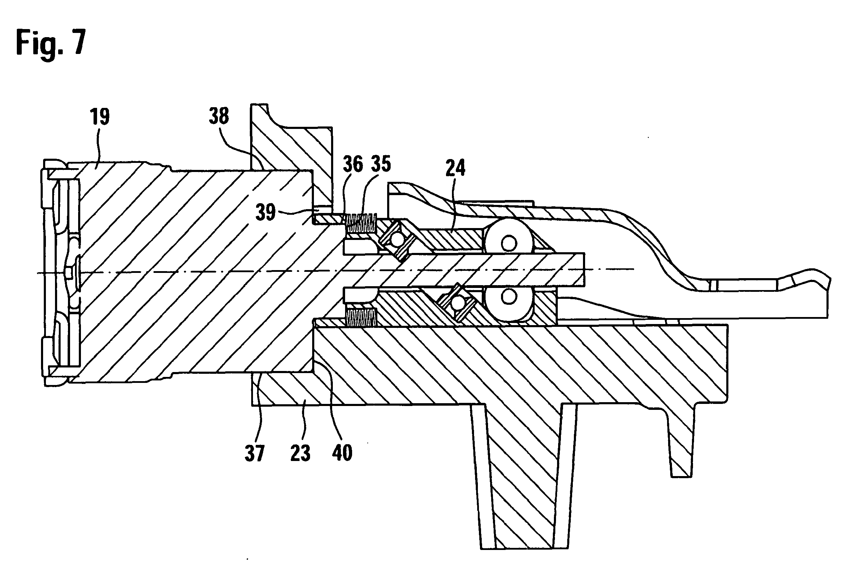

In Fig. 4 a-e sind verschiedene Stufen des Einführens der Antriebseinheit 27 in die Hebeleinheit 28 dargestellt. Ausgehend von Fig. 4a, in der beide Baugruppen der Übersicht halber einzeln und unverbunden dargestellt sind, wobei die Hebeleinheit 28 bereits an der Getriebeglocke 23 befestigt ist, werden beide Teile (Baugruppen) gemäß Fig. 4b so weit wie möglich ohne Kraftaufwand zusammengeführt. In den in Fig. 4c-e dargestellten Einschiebepositionen muss der Hebel 11 gegen die Kraft der Federn 4 auseinandergedrückt werden, dies ist durch einen Pfeil F_{Feder} dargestellt. Die durch die Kraft F_{Feder} bewirkte Montagekraft F_{Montage} hängt hauptsächlich von der Steigung des Hebels 11 im Kontaktpunkt mit der Rolleneinheit 14, dieser ist als Winkel α bezeichnet, ab. Die Montage ist besonders einfach, wenn die Rolleneinheit 14 möglichst weit in Richtung der Antriebsmotoreinheit 19 zurückgefahren ist. Um dies zu gewährleisten ist, wie in Fig. 7 dargestellt, ein Endanschlag 35 zwischen Antriebsmotoreinheit 19 und dem Rollenträger 24 angeordnet. Der Anschlag 35 wird beispielsweise dadurch bewirkt, dass der Rollenträger 24 der Rolleneinheit 14 an einem stirnseitigen Gehäusevorsprung 36 der Antriebsmotoreinheit 19 anstößt.

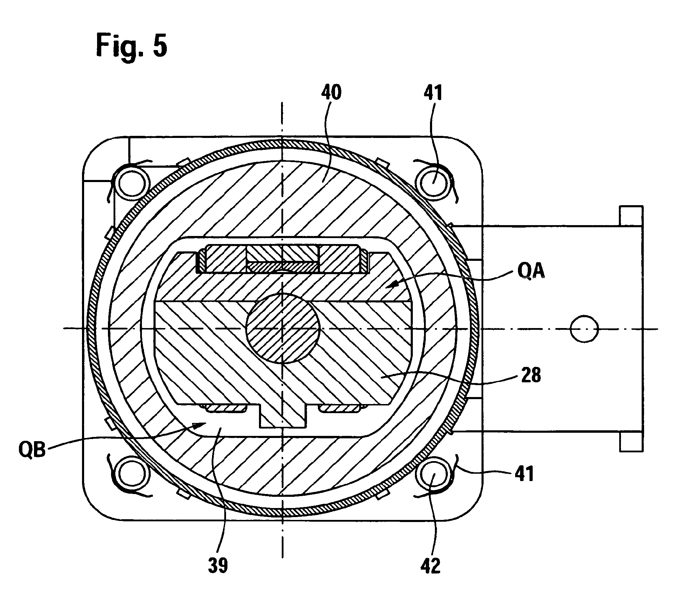

Fig. 7 verdeutlicht die Befestigung der Antriebsmotoreinheit 19 an der Getriebeglocke 23. In die Getriebeglocke 23 ist eine im Wesentlichen zylindrische Stufenbohrung 37 eingebracht, in die ein im Wesentlichen zylindrischer Kopfbereich 38 der Antriebsmotoreinheit 19 eingreift. Der Außendurchmesser des zylindrischen Kopfbereiches 38 bildet mit der Stufenbohrung 37 eine Passung (z.B. Spielpassung, Übergangspassung) zur Zentrierung der Antriebseinheit 19. Die Stufenbohrung 37 dient ggf. auch der Befestigung (z.B. durch eine Übergangspassung) der Antriebseinheit 19. Die Stufenbohrung 37 geht über in eine Öffnung 39, so dass ein Anlageflansch 40 zur stirnseitigen Festlegung der Antriebsmotoreinheit 19 entsteht. Die Öffnung 39 ist, wie in Fig. 5 zu erkennen ist, im Querschnitt so beschaffen, dass die Hebeleinheit 28 durch die Öffnung 39 hindurchgeschoben werden kann. Ist die Hebeleinheit zusammen mit der Antriebsmotoreinheit 19 bis in ihre Einbaulage gemäß Fig. 4 d gedrückt worden, so wird die Antriebsmotoreinheit 19 mit Befestigungsflanschen 41 über die entsprechenden Bohrungen in Befestigungsbohrungen 42 der Getriebeglocke 23 verschraubt.

### Bezugszeichenliste

- 1: Hebelsystem
- 2: Ausrückvorrichtung
- 3: Kupplung
- 4: Feder
- 5: Kupplungsscheibe
- 6: Druckplatte
- 7: Gegendruckplatte
- 8: Tellerfeder
- 9: Kupplungsdeckel
- 10: Ausrücklager
- 11: Hebel
- 12: Gehäuseseitiges Auflager
- 13: Verlagerbarer Drehpunkt
- 14: Rolleneinheit
- 15: Rolle
- 16: Abstützung
- 17: Rolle
- 18: Spindel
- 19: Antriebsmotoreinheit
- 20a, 20b: Flansche
- 21 a, 21 b: Befestigungsschrauben
- 22: Bohrung
- 23: Getriebeglocke
- 24: Rollenträger
- 25: Aufnahmezapfen
- 26: Klauen
- 27: Antriebseinheit
- 28: Hebeleinheit
- 29: Teller
- 30: Tellerschrauben
- 31: Aufnahmeöffnung
- 32: Fangnut
- 33: Führungsnut
- 34: Führungsprofil
- 35: Endanschlag
- 36: Gehäusevorsprung
- 37: Stufenbohrung
- 38: Kopfbereich
- 39: Öffnung
- 40: Anlageflansch
- 41: Befestigungsflansch
- 42: Befestigungsbohrungen

- A: 1. Endseite
- B: Auflagepunkt
- C: 2. Endseite
- X: Doppelpfeil
- Y: Doppelpfeil
- L: radiale Länge
- QA: Querschnittsfläche
- QB: Querschnittsfläche
- F_{Feder}: Kraft
- F_{Montage}: Montagekraft
- α: Winkel

## Patentansprüche

1. Kombination einer Getriebeglocke und einem Hebelsystem (1) zur Betätigung von Kupplungen (3) oder Getriebe-Bremsen, in einem Antriebsstrang eines Kraftfahrzeuges mit einem Antrieb und einem Getriebe, mit einem Hebel (11) mit einer ersten Endseite (A), einer zweiten Endseite (C) und mindestens einem Auflagepunkt (B), der gleichzeitig einen Drehpunkt darstellt, **dadurch gekennzeichnet, dass** das Hebelsystem eine Antriebseinheit (27) sowie eine Hebeleinheit (28) als zwei vorgefertigte Teilmodule umfasst, wobei die Hebeleinheit (28) in der Getriebeglocke (23) als funktionsfähige Einheit montierbar ist, so daß die vormontierte aus Antriebsmotoreinheit (19), Spindel (18), Rolleneinheit (14) und Abstützung (16), mit der sich diese an einer Getriebeglocke (23) abstützt, bestehende Antriebseinheit (27) durch eine in Einbaulage im Wesentlichen radiale Bewegung durch eine Öffnung (31,39) in der Getriebeglocke hindurch mit der Hebeleinheit (28) verbunden werden kann.

2. Kombination einer Getriebeglocke und einem Hebelsystem nach Anspruch 1, **dadurch gekennzeichnet, dass** die Abstützung (16), die Spindel (18) sowie die Rolleneinheit (14) über eine in Einbaulage radiale Länge der Antriebseinheit (27) eine Querschnittsfläche (QA) besitzen, die kleiner als die Öffnung (31,39) der Getriebeglocke (23) ist.

3. Kombination einer Getriebeglocke und einem Hebelsystem nach Anspruch 2, **dadurch gekennzeichnet, dass** die Öffnung (31,39) der Getriebeglocke (23) in eine Stufenbohrung (37) übergeht.

4. Kombination einer Getriebeglocke und einem Hebelsystem nach Anspruch 3, **dadurch gekennzeichnet, dass** die Stufenbohrung (37) Mittel zur Zentrierung der Antriebsmotoreinheit (19) umfasst.

5. Kombination einer Getriebeglocke und einem Hebelsystem nach einem der vorhergehenden Ansprüche, **dadurch gekennzeichnet, dass** die Hebeleinheit (28) Mittel zur Zentrierung der Antriebseinheit (27) umfasst.

6. Kombination einer Getriebeglocke und einem Hebelsystem nach einem der vorhergehenden Ansprüche, **dadurch gekennzeichnet, dass** die Hebeleinheit (28) eine Führungsnut (33) umfasst, in die ein Führungsprofil (34) der Antriebseinheit (27) eingreift.

7. Kombination einer Getriebeglocke und einem Hebelsystem nach Anspruch 6, **dadurch gekennzeichnet, dass** die Führungsnut (33) eine Fangnut (32) aufweist.

8. Verfahren zur Montage eines Hebelsystems zum Betätigen von Kupplungen oder Getriebe-Bremsen, insbesondere für Kraftfahrzeuge, mit einem Hebel (11) mit einer ersten Endseite (A), einer zweiten Endseite (C) und mindestens einem Auflagepunkt (B), der gleichzeitig einen Drehpunkt darstellt, **gekennzeichnet durch** folgende Verfahrensschritte:
- Montage einer Hebeleinheit (28) in einer Getriebeglocke (23) als funktionsfähige Einheit;
- Einführen der vormontierten Antriebseinheit (27) **durch** eine in Einbaulage im Wesentlichen radiale Bewegung **durch** eine Öffnung (31,39) in der Getriebeglocke (23) hindurch und
- Verbinden der vormontierten Antriebseinheit (27) mit der Hebeleinheit (28).

9. Verfahren nach Anspruch 8, **dadurch gekennzeichnet, dass** der Hebel (11) so vorgespannt ist, dass dieser beim Einführen der Antriebseinheit (27) durch eine oder mehrere Rollen (15, 17) der Rolleneinheit (14) in axialer Richtung verdrängt wird.

## Claims

1. Combination of a transmission bell and a lever system (1) for actuating clutches (3) or gear brakes, in a drive train of a motor vehicle having a drive and a transmission, having a lever (11) with a first end side (A), a second end side (C) and at least one supporting point (B) which at the same time represents a pivot point, **characterized in that** the lever system comprises a drive unit (27) and a lever unit (28) as two prefabricated part modules, it being possible for the lever unit (28) to be mounted in the transmission bell (23) as a functional unit, with the result that the preassembled drive unit (27) which consists of drive motor unit (19), spindle (18), roller unit (14) and support (16), by way of which the said drive unit (27) is supported on a transmission bell (23), can be connected to the lever unit (28) by way of a substantially radial movement in the installation position through an opening (31, 39) in the transmission bell.

2. Combination of a transmission bell and a lever system according to Claim 1, **characterized in that** the support (16), the spindle (18) and the roller unit (14) have a cross-sectional area (QA) over a radial length of the drive unit (27) in the installation position, which cross-sectional area (QA) is smaller than the opening (31, 39) of the transmission bell (23).

3. Combination of a transmission bell and a lever system according to Claim 2, **characterized in that** the opening (31, 39) of the transmission bell (23) merges into a stepped bore (37).

4. Combination of a transmission bell and a lever system according to Claim 3, **characterized in that** the stepped bore (37) comprises means for centring the drive motor unit (19).

5. Combination of a transmission bell and a lever system according to one of the preceding claims, **characterized in that** the lever unit (28) comprises means for centring the drive unit (27).

6. Combination of a transmission bell and a lever system according to one of the preceding claims, **characterized in that** the lever unit (28) comprises a guide groove (33), into which a guide profile (34) of the drive unit (27) engages.

7. Combination of a transmission bell and a lever system according to Claim 6, **characterized in that** the guide groove (33) has a capturing groove (32).

8. Method for mounting a lever system for actuating clutches or gear brakes, in particular for motor vehicles, having a lever (11) with a first end side (A), a second end side (C) and at least one supporting point (B) which at the same time represents a pivot point, **characterized by** the following method steps:
- mounting of a lever unit (28) in a transmission bell (23) as a functional unit;
- introduction of the preassembled drive unit (27) by way of a substantially radial movement in the installation position through an opening (31, 39) in the transmission bell (23), and
- connection of the preassembled drive unit (27) to the lever unit (28).

9. Method according to Claim 8, **characterized in that** the lever (11) is prestressed in such a way that it is displaced in the axial direction by one or more rollers (15, 17) of the roller unit (14) during introduction of the drive unit (27).

## Revendications

1. Combinaison d'une cloche de transmission et d'un système de levier (1) pour l'actionnement d'embrayages (3) ou de freins sur la transmission, dans une chaîne cinématique d'un véhicule automobile doté d'un entraînement et d'une transmission, comprenant un levier (11) doté d'un premier côté frontal (A), d'un deuxième côté frontal (C) et d'au moins un point d'appui (B) qui constitue en même temps un centre de rotation, **caractérisée en ce que** le système de levier comporte une unité d'entraînement (27) ainsi qu'une unité de levier (28) sous forme de deux modules partiels préfabriqués, l'unité de levier (28) pouvant être montée dans la cloche de transmission (23) en tant qu'unité fonctionnelle, de sorte que l'unité d'entraînement (27) prémontée, constituée d'une unité de moteur d'entraînement (19), d'une broche (18), d'une unité de rouleaux (14) et d'un appui (16) à l'aide duquel elle s'appuie contre une cloche de transmission (23), peut être reliée à l'unité de levier (28) par un déplacement essentiellement radial dans la position d'installation, à travers une ouverture (31, 39) dans la cloche de transmission.

2. Combinaison d'une cloche de transmission et d'un système de levier selon la revendication 1, **caractérisée en ce que** l'appui (16), la broche (18) ainsi que l'unité de rouleaux (14) présentent, sur une longueur radiale de l'unité d'entraînement (27) dans la position d'installation, une surface en section transversale (QA) qui est plus petite que l'ouverture (31, 39) de la cloche de transmission (23).

3. Combinaison d'une cloche de transmission et d'un système de levier selon la revendication 2, **caractérisée en ce que** l'ouverture (31, 39) de la cloche de transmission (23) se prolonge en un alésage étagé (37).

4. Combinaison d'une cloche de transmission et d'un système de levier selon la revendication 3, **caractérisée en ce que** l'alésage étagé (37) comporte des moyens de centrage de l'unité de moteur d'entraînement (19).

5. Combinaison d'une cloche de transmission et d'un système de levier selon l'une quelconque des revendications précédentes, **caractérisée en ce que** l'unité de levier (28) comporte des moyens de centrage de l'unité d'entraînement (27).

6. Combinaison d'une cloche de transmission et d'un système de levier selon l'une quelconque des revendications précédentes, **caractérisée en ce que** l'unité de levier (28) comporte une rainure de guidage (33) dans laquelle vient en prise un profilé de guidage (34) de l'unité d'entraînement (27).

7. Combinaison d'une cloche de transmission et d'un système de levier selon la revendication 6, **caractérisée en ce que** la rainure de guidage (33) comprend une rainure d'accrochage (32).

8. Procédé de montage d'un système de levier pour actionner des embrayages ou des freins sur la transmission, en particulier pour des véhicules automobiles, comprenant un levier (11) doté d'un premier côté frontal (A), d'un deuxième côté frontal (C) et d'au moins un point d'appui (B) qui constitue en même temps un centre de rotation, **caractérisé par** les étapes de procédé suivantes :
- montage d'une unité de levier (28) dans une cloche de transmission (23) en tant qu'unité fonctionnelle ;
- insertion de l'unité d'entraînement prémontée (27) par un déplacement essentiellement radial dans la position d'installation, à travers une ouverture (31, 39) dans la cloche de transmission (23) et
- liaison de l'unité d'entraînement prémontée (27) à l'unité de levier (28).

9. Procédé selon la revendication 8, **caractérisé en ce que** le levier (11) est précontraint de telle sorte qu'il soit déplacé dans la direction axiale par un ou plusieurs rouleaux (15, 17) de l'unité de rouleaux (14) lors de l'insertion de l'unité d'entraînement (27).
